# EUROPEAN PATENT APPLICATION

(11) **EP 4 516 177 A1**
(43) Date of publication of application: **05.03.2025**
(21) Application number: 24180025.9
(22) Date of filing: 04.06.2024
(51) Int. Cl.: A47J 43/14, A47G 19/28

(54) **EGG OPENER, SEPARATOR, SPOON, AND MULTI-TOOL**

(30) Priority: 30.08.2023 GB 202313157
(71) Applicant: Fischer, Thomas, Newcastle upon Tyne NE20 9BP (GB)
(72) Inventor: Fischer, Thomas, Newcastle upon Tyne NE20 9BP (GB)
(74) Representative: Cyrson, Matthew Dominic

(57) **Abstract**

An egg opening and separating device (12) comprising a mount (22), a blade (24), and a bowl (42). The blade (24) has a curved cutting surface (31) which defines an opening (34) for receiving a liquid component of the egg and/or a lesser part of the eggshell therethrough, the curved cutting surface (31) having at least two ends (32). The bowl (42) is dimensioned to receive an egg yolk of an egg but not the egg yolk together with the whole egg white. At least part of the bowl (42) is movably securable to the mount (22) so that said at least part of the bowl (42) can move relative to the mount (22).

## Description

The present invention relates to an egg opener, in particular an eggshell opener for opening or removing the shell of an egg. The invention also relates to an egg separator for separating the yolk and white of an egg. The invention further relates to a spoon, in particular a collapsible spoon for eating an egg therewith. The invention additionally relates to an egg multi-tool device which may include at least any one of the aforementioned tools.

A raw egg includes a solid shell which encloses a liquid component. The liquid component includes a white or albumen surrounding a yolk or vitellus. The liquid component may be cooked, typically to solidify at least the white and often also the yolk. The liquid component may be removed from the eggshell before cooking, or the liquid component may be cooked in the eggshell to produce what is typically known as a boiled egg.

Eggs can be prepared and eaten in different ways. At least some of these preparation methods can be time consuming and fiddly, requiring a diverse range of equipment, and/or resulting in difficulties.

For example, a user may wish to open the shell of a raw egg to dispense the liquid component therefrom. This is typically achieved by breaking the side of the eggshell on the side of a bowl, and opening the shell from the break to release the liquid component. However, some people may find such an action difficult, and it may result in small pieces of shell mixing with the liquid component.

A user may additionally wish to separate the yolk from the white of the raw liquid component, for cooking or baking purposes. This may be achieved by opening the shell as mentioned previously, separating the two halves of the shell, and then moving the yolk between the halves to tip the white from the shell whilst retaining the yolk. However, some people may find such an action difficult and time consuming, particularly if many eggs are required to be separated for a recipe. This action may also result in splitting of the yolk, and thereby mixing of the yolk and white.

When a boiled egg has been cooked, the user will then wish to access the now at least partially solidified interior of the egg. To achieve this, the user may attempt to slice off the top of the egg with a knife, or hit the top to break the shell and then peel off part of the shell. Once sliced or peeled off, the user can then eat the exposed interior, with an egg spoon for example. However, this slicing or breaking may result in pieces of shell becoming lodged in the cooked white, and the sliced edge is typically ragged. These results may reduce enjoyment of the egg.

Alternatively, a user may wish to remove the entire shell from the cooked white. This may be done via hitting the shell to form an initial break, and then peeling the shell from the egg. However, this process is laborious and may result in pieces of shell becoming lodged in the cooked white.

Furthermore, cooked eggs are easily transportable, and so may form the basis of a packed lunch to be eaten away from the home. However, to do so, the user may require a spoon and other equipment, which may be less convenient to transport.

The present invention seeks to provide a solution to these problems, and thereby allow for the convenient preparation and consumption of eggs.

According to a first aspect of the present invention, there is provided an eggshell opener for opening an eggshell, the eggshell opener comprising: a mount; and a blade for breaking the eggshell, the blade being received by the mount and having a curved cutting surface which defines an opening for receiving a liquid component of the egg and/or a part of the eggshell therethrough, the blade having a curved extent which is greater than a semi-circle but is non-circular.

Since the blade is non-circular, it can provide better grip on the edge, and prevent slippage. A circular blade has been found to slip on, rather than cut, the eggshell. The non-circularity may be provided by the blade having two ends, and therefore being non-continuous or non-endless. The two ends can provide grip on the egg. Alternatively, the blade may have a continuous or endless, but not circular, extent. For example, the blade may have an elliptical or ovular shape, which can similarly wedge or provide grip on the egg. The curvature of the continuous blade could be irregular, for example having a semi-circular portion for cutting the egg and a semi-elliptical portion for wedging the egg. At least a portion of the curvature may be adapted to match the curvature of the egg.

The curvature of the blade provides grip on the egg and prevents the egg from slipping as it is pushed into the blade.

Preferably, the cutting surface may be U-shaped, C-shaped or substantially U-shaped, or substantially C-shaped.

Advantageously, the blade may received by the mount so as to be angled inwardly. An inwardly angled blade has proved advantageous for cutting the shell.

Beneficially, the blade may be angled inwardly at an angle of between 40 degrees and 50 degrees relative to a normal direction of a plane defined by the opening. Such a range of angles has a particularly advantageous cutting action.

Optionally, the blade may have teeth. As such, the blade is serrated. This may allow for the eggshell to be penetrated by the teeth, and thereby provide greater grip on the egg and prevent slippage. Additionally, it may allow a sawing action on the eggshell by rotating the egg. However, it will be appreciated that a non-serrated blade may be considered. For example, a cutting surface which is coarse or has been simply roughened may be used.

Additionally, there may be teeth of different height. Taller teeth may therefore penetrate the egg initially, to provide grip on the egg. As the egg is pushed further into the blade, the smaller teeth can engage the eggshell to complete the cutting action.

Preferably, the teeth may have a height of no more than 0.2 mm. As such, the teeth are no longer than the typical thickness of an eggshell, which reduces the risk of unintended cutting of the underlying white.

Advantageously, the teeth may have a height of no more than 0.2 mm and no less than 0.05 mm.

In a preferable embodiment, the blade may have a thickness of no more than 0.25 mm.

Additionally, the opener may further comprise a handle for holding the mount. Preferably, the blade is configured so that ends of the cutting surface face towards or substantially towards the handle. A handle allows for the opener to be easily held, used, and transported.

Optionally, the blade may be received by the mount so as to be angled towards the handle. For example, the angle may be between 5 degrees and 10 degrees. However, it will be appreciated that a horizontally arranged blade may be considered.

Preferably, the blade may be received by the mount in a fixed position. The blade is therefore stationary which reduces the number of moving parts in the eggshell opener.

This arrangement makes the disassembly, reassembly and cleaning of the opener easier.

Advantageously, the eggshell opener may have only one blade. A single blade reduces the number of components of the eggshell opener, making disassembly, reassembly and cleaning of the opener easier.

According to a second aspect of the invention, there is provided an egg separator for separating egg white, egg yolk, and eggshell, the egg separator comprising: a mount; and a bowl received by the mount, the bowl being dimensioned to receive an egg yolk of an egg but not the egg yolk together with the whole egg white of the egg so that when a liquid component of an egg is received therein the egg white overflows from the bowl; at least part of the bowl being movably securable to the mount so that said at least part of the bowl can move relative to the mount for releasing at least part of the eggshell.

As such, the egg white can be easily separated from the yolk, and any underlying lesser piece or pieces of eggshell discharged.

Preferably, said at least part of the bowl may be pivotable relative to the mount.

Beneficially, said at least part of the bowl may be attachable to the mount via a hinge.

Advantageously, the mount may have first and second parts which are moveable relative to each other, the bowl being secured at the hinge via engagement of the first and second parts.

In a preferable embodiment, the bowl may include an engagement surface for a user to manually manipulate movement of the bowl. The engagement surface may be defined by a hole in the base. This enables a user to manipulate the bowl with the thumb of the hand which is holding the separator. The hole may also allow for underlying white to drain from the bowl.

Additionally, the hole may be smaller than the egg yolk. This prevents the egg yolk from falling through the hole. To maximise the size of the hole whilst reducing the risk of greater pressure being put on the yolk, the hole may be elongate, for example being elliptical. Additionally, this may better suit the shape of a thumb tip.

Optionally, the mount may include at least one catch for releasably holding the bowl relative to the mount.

According to a third aspect of the invention, there is provided an egg opening and separating device comprising: a mount; a blade for breaking the eggshell, the blade being received by the mount and having a curved cutting surface which defines an opening for receiving a liquid component of the egg therethrough, the blade having a curved extent which is greater than a semi-circle but is non-circular; and a bowl received by the mount and adjacent to the blade, the bowl being dimensioned to receive an egg yolk of an egg but not the egg yolk together with the whole egg white, at least part of the bowl being movably securable to the mount so that said at least part of the bowl can move relative to the mount for releasing at least part of the eggshell; the device being configured so that an egg may be opened by the blade, a top of the shell received by the bowl and the egg decanted into the bowl via the opening, and the white overflows from the bowl.

As discussed above, since the blade is non-circular, it can provide better grip on the edge, and prevent slippage. A circular blade has been found to slip on, rather than cut, the eggshell. The non-circularity may be provided by the blade having two ends, and therefore being non-continuous or non-endless. The two ends can provide grip on the egg. Alternatively, the blade may have a continuous or endless, but not circular, extent. For example, the blade may have an elliptical or ovular shape, which can similarly wedge or provide grip on the egg. The curvature of the continuous blade could be irregular, for example having a semi-circular portion for cutting the egg and a semi-elliptical portion for wedging the egg. At least a portion of the curvature may be adapted to match the curvature of the egg.

According to a fourth aspect of the invention, there is provided a collapsible spoon comprising: a spoon head having a receiver; and a spoon handle which is at least in part receivable through the receiver, the spoon handle having a depressible projection, at least one of the depressible projection and the receiver having a slope configured so that as the spoon handle is inserted through the receiver, the depressible projection and receiver inter-engage along the slope and depress the projection and, once the depressible projection is through the receiver, the projection is reboundable to abut the receiver to prevent unintentional backward movement of the spoon handle.

The collapsible spoon may be an egg spoon.

The spoon head can thus be moved along the handle to shorten the overall length of the spoon so as to allow it to be more easily transported.

In a non-collapsed condition (i.e., when using the spoon for eating), the spoon head may be at the end of the handle, with the projection abutting the receiver to prevent the spoon head from moving back along the handle when the spoon is in use.

To collapse the spoon into a collapsed condition, the spoon head needs to be moved along the length of the handle. To achieve this, the depressible projection may first need to be manually depressed, so that the spoon head can pass thereover. Since the spoon head is along the length of the handle, the spoon is shorter in the collapsed condition than in the non-collapsed condition.

To return the spoon back to the non-collapsed condition, the spoon head is repositioned at the end of the handle by moving it along the slope of the depressible projection which automatically depresses the projection. Once the receiver passes the end of the depressible projection, the projection rebounds and abuts the receiver.

Preferably, the receiver may be tapered and an end portion of the spoon handle may have a corresponding flare so that the receiver securely engages the spoon handle.

Advantageously, the slope may be formed by the projection projecting at an angle relative to the handle. For example, here the projection is an angled strip of material, which projects over an opening or cut-out.

Beneficially, the projection may be depressible by virtue of at least in part being formed from a resilient material. For example, a resilient plastic may be considered. However, it will be appreciated that spring biased arrangement may be considered.

In a preferable embodiment, the depressible projection may be a first depressible projection, and the spoon handle may comprise a second depressible projection spaced apart from the first depressible projection along a longitudinal extent of the spoon handle, the spoon head being receivable between the first and second depressible projections. This prevents the spoon head from falling off the handle entirely, when it is received along the length of the handle.

According to a fifth aspect of the invention, there is provided an egg multi-tool comprising: the egg opening and separating device according to the third aspect of the invention, and the collapsible spoon according to the fourth aspect of the invention received by the egg opening and separating device.

According to a sixth aspect of the present invention, there is provided an eggshell opener for opening an eggshell, the eggshell opener comprising: a mount; and a blade for breaking the eggshell, the blade being received by the mount and having a curved cutting surface which defines an opening for receiving a liquid component of the egg and/or a part of the eggshell therethrough, the curved cutting surface having at least two ends.

The blade has two ends, and thus is not a circular blade or a continuous blade. As such, the two ends can provide grip on the egg and stop it from slipping, resulting in an easier cutting action. The curvature of the blade suits the shape of the egg, and may be adapted to match the shape of the egg.

The invention will now be more particularly described, by way of example only, with reference to the accompanying drawings, in which:
Figure 1 shows a top view of a first embodiment of an egg multi-tool in accordance with a fifth aspect of the invention;
Figure 2 shows a bottom view of the egg multi-tool of Figure 1;
Figure 3 shows the egg multi-tool of Figure 1 separated into an egg opening and separating device according to third aspect of the invention, a collapsible spoon according to a fourth aspect of the invention, and a seasoning dispenser;
Figure 4 shows a top view of an eggshell opener in accordance with a first aspect of the invention of the egg opening and separating device of Figure 3;
Figure 5 shows an elevated front view of the eggshell opener of Figure 4;
Figure 6 shows a portion of a second embodiment of an egg multi-tool in accordance with a fifth aspect of the invention, having a blade to be received by fastening nubs;
Figure 7 shows the blade of the egg multi-tool of Figure 6;
Figure 8 shows a side view of the egg opening and separating device of Figure 3 having a bowl engaged with a mount in a closed condition;
Figure 9 shows a similar side view as Figure 8 with the bowl engaged with the mount in an open condition;
Figure 10 shows an underside view of a first part of the egg opening and separating device of Figure 3;
Figure 11 shows a view of a second part of the egg opening and separating device of Figure 3;
Figure 12 shows a top view of the collapsible spoon of Figure 3;
Figure 13 shows the collapsible spoon of Figure 3, with a handle disconnected from a head;
Figure 14 shows a front view of the collapsible spoon of Figure 3, with the handle displaced from the head;
Figure 15 shows a bottom view of a container of the seasoning dispenser of Figure 3, having a lid of the dispenser removed;
Figure 16 shows a lid of the seasoning dispenser of Figure 3;
Figure 17 shows an elevated side view of the seasoning dispenser of Figure 3; and
Figure 18 shows a third embodiment of the blade of the egg multi-tool of Figure 6.

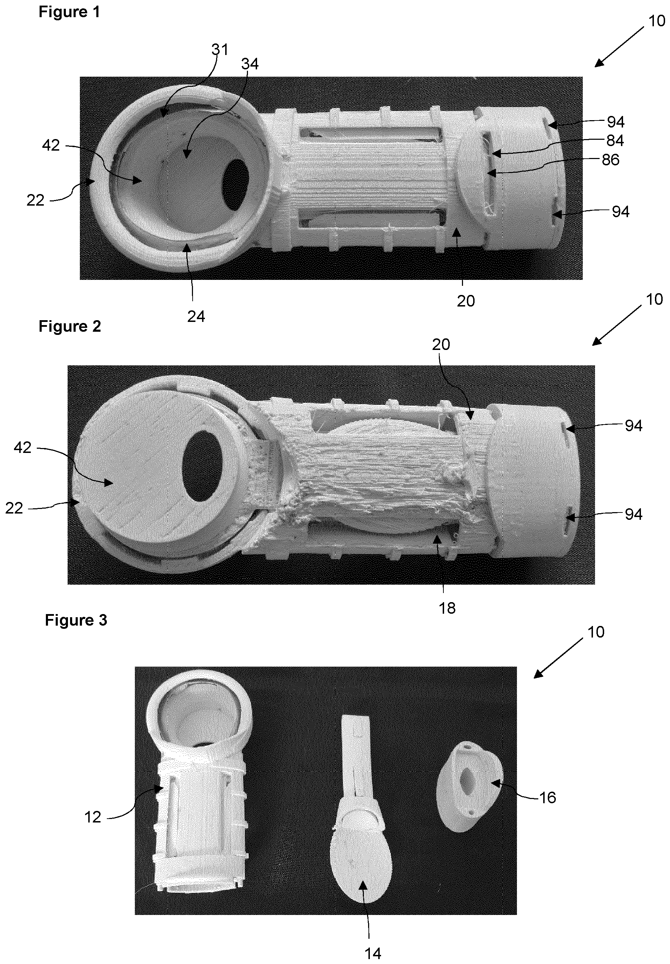

Referring firstly to Figures 1 and 2, there is shown an egg multi-tool 10 in an assembled condition. Where dimensions of the egg multi-tool 10 are given herein relative to those of an egg, it is preferable that the egg is an averagely sized chicken's egg. However, it will be appreciated that the device may be sized to suit the eggs of other birds or fowl, such as duck, goose, or quail.

Referring in addition to Figure 3, which shows the egg multi-tool 10 in a disassembled condition, the egg multi-tool 10 comprises three main tools or devices, which include an egg opening and separating device 12, a collapsible spoon 14, and a seasoning dispenser 16.

The egg multi-tool 10 may have general dimensions of around 125 mm long, 50 mm wide, and around 35 mm deep. The egg opening and separating device 12 itself may be 100 mm long.

The egg opening and separating device 12 includes a recess 18 or chamber, in which the collapsible spoon 14 may be received. The recess 18 is defined in a handle 20 of the egg opening and separating device 12, and as such the handle 20 may be considered to be hollow. The recess 18 may be closed by the seasoning dispenser 16 attaching to the end of the egg opening and separating device 12 at the opening of the recess 18.

At least part of the egg opening and separating device 12, in particular at least the handle, may be formed from a transparent or translucent material so that the collapsible spoon 14 may be visible. The material may be transparent or translucent plastic, for example Tritan (RTM) or another copolymer, which may be coloured. It will be appreciated that other materials may be considered such as food safe metals or plastics.

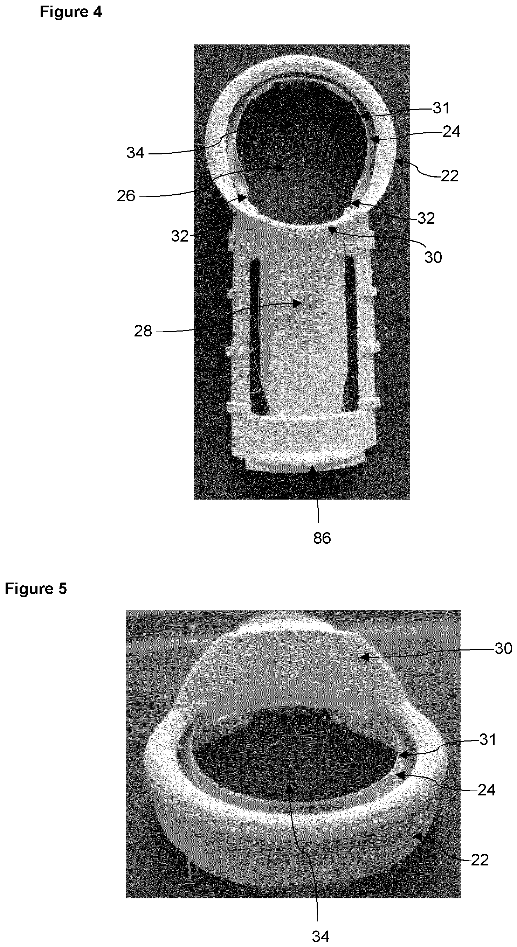

Referring now to Figures 4 and 5, the egg opening and separating device 12 comprises an eggshell opener for opening an eggshell. The eggshell opener comprises a mount 22 and a blade 24.

The mount 22 is configured to receive and/or hold the blade 24 in position. Here the blade 24 is removably attachable to the mount 22, although it will be appreciated that this may not be necessary and the blade 24 may be permanently attached to the mount 22 and/or may be unitarily formed as a one-piece therewith.

The mount 22 preferably defines an aperture 26 therethrough which is preferably sized to receive at least the yolk of an egg. The mount 22 has a circular or substantially circular profile, although it will be appreciated that this may not be necessary and other shapes may be considered. The mount 22 may have an annular or substantially annular shape, including a depth such that the mount 22 may be considered to be tubular.

The handle 20 connects to the mount 22, and may be unitarily formed therewith. Here the handle 20 may be formed of two parts, with only an upper part 28 shown in Figure 4. There is preferably an upstanding shield 30, lip, or guard between the mount 22 and the handle 20, and which extends less than half of the way around the mount 22. The shield 30 may be concave and may protect the handle from splash back.

The handle 20 preferably has an elliptical or ovular cross-section, which enables the user to maintain a good grip on the handle 20.

The blade 24 is mounted or secured to the mount 22. The blade 24 has a curved and discontinuous cutting surface 31 or cutting edge. In other words, the blade 24, despite being curved, is not endless, and instead here has two ends 32. As such, the blade 24 is not a circular blade 24. The blade 24 defines an opening 34 for receiving a liquid component of the egg and/or a part of the shell therethrough.

The shape of the blade 24 is here a U-shape or C-shape or substantial U-shape or C-shape. However, it will be appreciated that other shapes may be considered. The blade 24 may be configured to have an arc or be curved to an extent which is greater than a semi-circle, for example here extending approximately three-quarters of a circle. The curvature of the blade 24 further assists in gripping the egg and prevents the egg from slipping as it is pushed into the blade 24.

The diameter of the U-shape or C-shape is less than the width of the egg, and may hold the egg in position.

The U-shape of the blade 24 thus defines a mouth, between two ends 32 of the blade 24. The blade 24 is preferably positioned so that the mouth faces the handle 20.

The blade 24 is preferably angled inwardly, towards a normal direction of a plane defined by the opening of the mount 22 and/or blade 24. Preferably the blade 24 is at an angle of between 40 degrees and 50 degrees, although a wider range of between 20 degrees and 70 degrees may also be considered. As such, the cutting edge or surface is inward of the lower or opposite side of the blade 24. It will be appreciated that this angling of the blade 24 may be omitted.

The blade 24 is also angled towards the handle 20. That is to say, the centre of the curve of the blade 24 may be inclined relative to the ends 32 of the blade 24. As such, the plane of the opening 34 of the blade 24 may be angled relative to the handle 20. The incline may be at an angle of between 5 degrees and 10 degrees. As such, the blade 24 is not precisely horizontally arranged. However, it will be appreciated that this incline may be omitted.

The blade 24 is serrated, and so here has teeth at the cutting surface 31. The teeth are small, and preferably have a height or cutting depth or no more than the thickness of the eggshell. As such, the teeth preferably have a height of no more than 0.2 mm. However, it will be appreciated that longer teeth may be considered in some instances.

There are preferably teeth of differing heights. For example, there may be teeth in a range of between 0.05 mm and 0.2 mm.

The teeth preferably follow a A-B-C-D-C-B repeating pattern, with A being the longest tooth, for example 0.2 mm, and D the shortest tooth, for example 0.05 mm.

Whilst a serrated edge is preferred, it will be appreciated that instead of teeth as such, a generally rough or coarse cutting surface 31 may provide a similar effect. A flat or smooth cutting surface 31 may also be considered.

The blade 24 is preferably thin, for example having a thickness of no more than 0.25 mm.

The blade 24 may be separatable from the mount 22, and may be attached via an interference fit, such as via tabs of the blade 24 being received by grooves or slots in the mount 22.

The blade 24 is preferably received by the mount 22 in a fixed position. The blade 24 is therefore stationary within the eggshell opener, which reduces the number of moving parts of the eggshell opener.

The blade 24 may be a single blade 24, as shown in the Figures. Having a single blade 24 reduces the number of components of the opener and makes the disassembly, reassembly and cleaning of the opener easier.

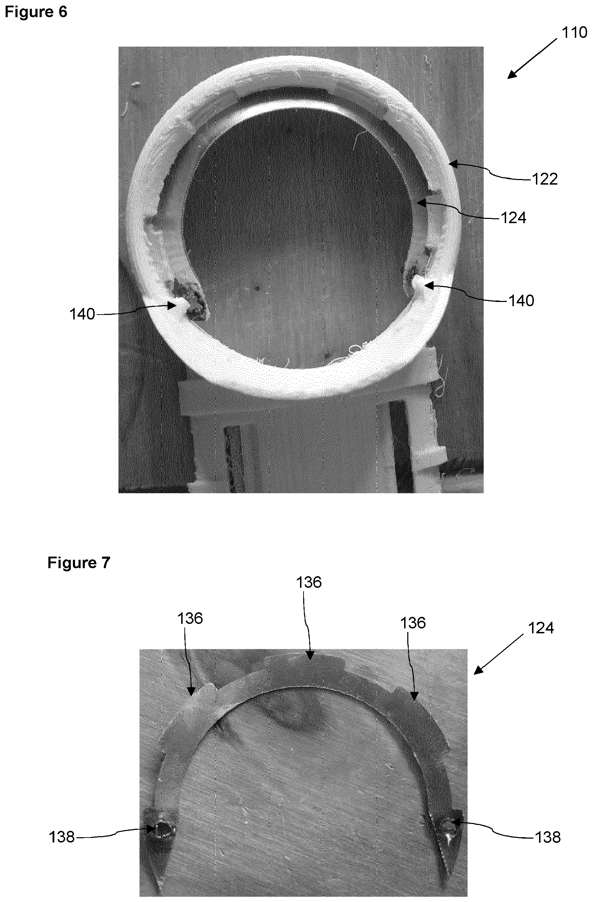

Referring now to Figures 6 and 7, there is shown a second embodiment of the egg multi-tool 110. The second embodiment 110 is similar or identical to the first embodiment 10, except that the blade 124 and mount 122 have an additional attachment means to allow inter-attachment.

The second embodiment of the blade 124 preferably includes the tabs 136, but may additionally or alternatively include an aperture 138 or hole in each end portion of the blade 124. The mount 122 includes corresponding protrusions or nubs 140 for receipt in the hole to thereby additionally secure the blade 124 to the mount 122. However, it will be appreciated that, instead of protrusions, the mount may have corresponding holes. Fasteners, such as bolts or screws, may secure the blade to the mount via the apertures and holes.

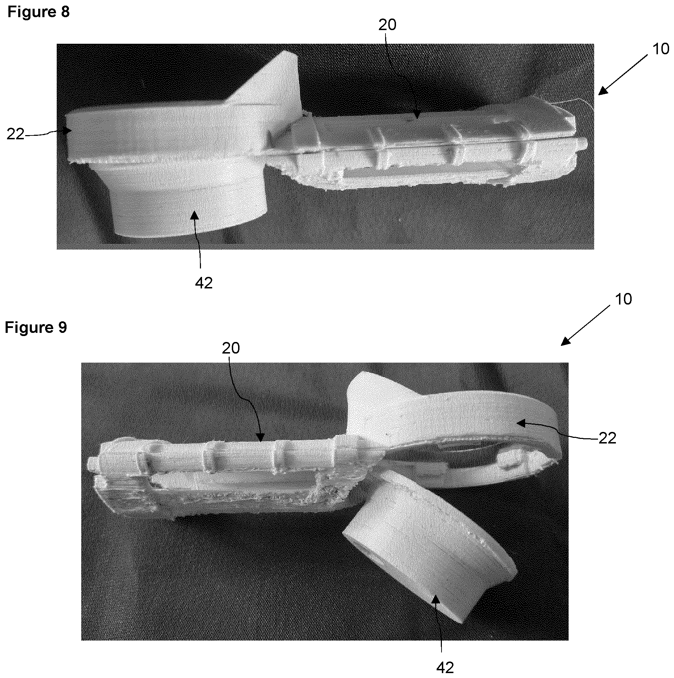

Referring now to Figures 8 to 10, and back to the first embodiment of the egg multi-tool 10, the egg opening and separating device 12 comprises an egg separator for separating egg white, egg yolk, and at least part of an eggshell.

The egg separator comprises the aforementioned mount 22 along with a bowl 42 or cup received by the mount 22. The bowl 42 is dimensioned to receive or accommodate an egg yolk of an egg, and a lower part of the shell, but not the egg yolk and lower part of the shell together with the whole egg white.

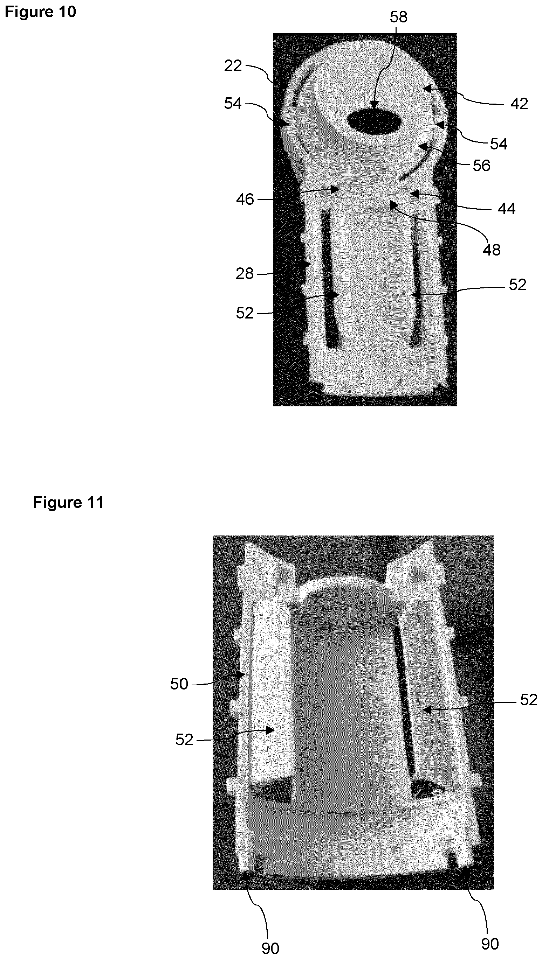

The bowl 42 is pivotably attached to the mount 22, in particular being attached via a hinge 44, which is best shown in Figure 10. As such, here the bowl 42 may pivot or swing from its hinge 44, which is preferably at or adjacent to the handle 20. The bowl 42 may adopt a closed configuration, as shown in Figure 8, and an open configuration as shown in Figure 9.

The hinge 44 is formed via the bowl 42 having a pin 46 or rod which is received in a groove 48 by the mount 22 or handle 20. The groove 48 may be in the upper part 28 of the handle 20, with the lower part 50 of the handle 20 being attached to the upper part 28 to house the hinge 44.

As shown in Figure 10 and Figure 11, the upper and lower parts 28, 50 of the handle 20 may include rails and/or brackets 52 for sliding the lower part 50 onto the upper part 28. The upper and lower parts 28, 50 may releasably connect together via an interference fit or similar.

The bowl 42 may be secured in its closed configuration as shown in Figure 8 by a catch which forms an interference fit with the bowl 42. Here this catch is formed via a plurality of tabs 54, as best shown in Figure 10, which extend inwardly at least partly around the perimeter of the mount 22, which together capture a lip 56 of the bowl 42.

The catch can be overcome by manually pulling downwards on the bowl 42. To facilitate such a pulling motion, the bowl 42 preferably includes an engagement surface for manual engagement. Here the engagement surface is created by a hole 58 in the bowl 42, which is preferably an aperture or through-hole. The hole 58 is smaller than the size of the egg yolk. Here the hole 58 is elongate, in particular being elliptical, to better suit a user's thumb, whilst maintaining a small overall surface area to prevent undue pressure on the yolk.

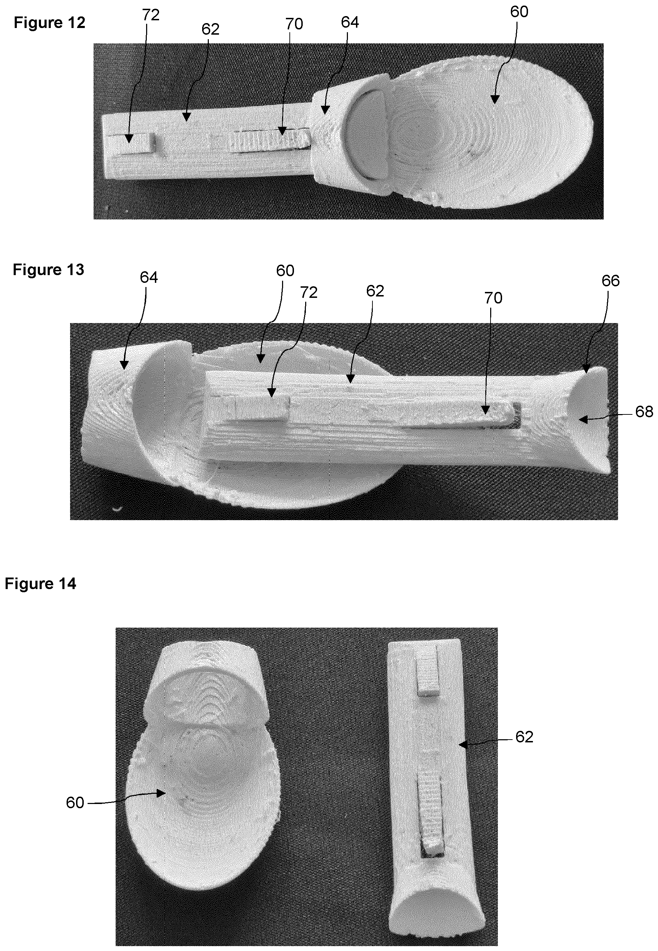

Referring now to Figures 12 to 14, the collapsible spoon 14 comprises a spoon head 60 and a spoon handle 62, the spoon head 60 and spoon handle 62 being moveable relative to each other, and preferably being detachable from each other.

The spoon head 60 defines a bowl of the spoon 14.

The spoon head 60 has a receiver 64, and the spoon handle 62 is receivable at least in part through the receiver 64. Here, only part of the spoon handle 62 is receivable through the receiver 64, a proximal end portion 66 to the spoon head 60 not being receivable through the receiver 64. The proximal end portion 66 has a greatest width which is greater than the narrowest width of the receiver 64, and so the handle 20 cannot entirely pass through the receiver 64.

The proximal end portion 66 is preferably flared, and the receiver 64 is preferably correspondingly tapered. This forms a tight fit between the spoon head 60 and spoon handle 62.

The receiver 64 defines an aperture, which may be generally elliptical. The spoon handle 62 preferably has a similar elliptical cross-section. The proximal end portion 66 may have a concave end surface 68.

The spoon handle 62 has a first depressible projection 70 which can be depressed to allow the receiver 64 to pass along the spoon handle 62, and then raised to prevent the spoon handle 62 unintentionally moving back along the spoon handle 62.

Here the first depressible projection 70 is sloped to allow the receiver 64 to automatically depress the projection as it passes therealong. The slope extends upwards towards the proximal end portion 66 and is preferably formed by the first depressible projection 70 projecting at an angle to the spoon handle 62. The projection 70 is depressible preferably since it is formed from a resilient material, or at least the part of the projection 70 which joins to the spoon handle 62 is resilient. The first depressible projection 70 may be configured as a strip of material upstanding from a cut-out.

The first depressible projection 70 is at or adjacent to the proximal end portion 66, and is preferably spaced apart from the proximal end by a distance equating to a width of the receiver 64. As such, when the receiver 64 is received at the proximal end portion 66, an end of the first depressible projection 70 may abut the end of the receiver 64 to prevent the spoon head 60 from moving. As such, the first depressible projection 70 acts as a stop for the receiver 64.

The spoon handle 62 preferably includes a second depressible projection 72 which is spaced apart from the first depressible projection 70 along a longitudinal extent of the spoon handle 62. The second depressible projection 72 may be at a distal end of the spoon handle 62. The second depressible projection 72 may be used to prevent the spoon handle 62 from being unintentionally removed from the spoon handle 62. The second depressible projection 72 may be similarly formed and configured as the first depressible projection 70.

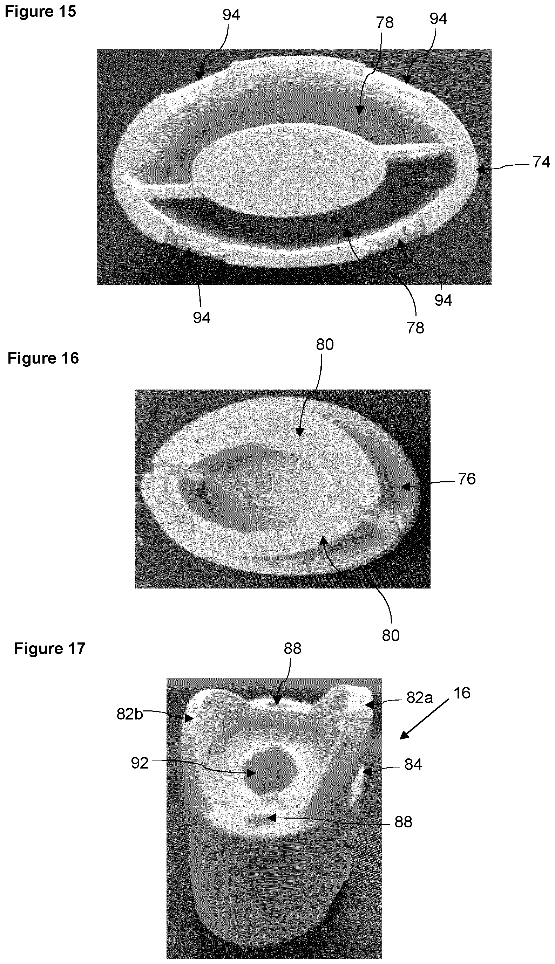

Referring now to Figures 15 to 17 the seasoning dispenser 16 includes a container 74 having a lid 76. The container 74 preferably has two chambers 78, one for receiving salt, and one for receiving pepper.

The lid 76 may have two protrusions 80, each sized to be received between walls of a respective chamber 78 to allow the lid 76 to connect to the container 74. However, it will be appreciated that different securement methods for the lid 76 may be considered.

The seasoning dispenser 16 is connectable to the handle 20. Such a connection may be formed via an interference fit.

For example, an end of the container 74 which opposes the lid 76 may have a pair of lips 82a, 82b which engage around an end of the handle 20. One of the lips 82a may include a slot 84 which is configured to receive a ridge 86 on the handle 20, preferably on the upper part 28 of the handle 20, to secure the dispenser 16 to the handle 20.

Furthermore, the container 74 may have at least one dispensing hole 88. Here there are two said dispensing holes 88, one for each chamber 78. The or each dispensing hole 88 is preferably closed by receiving a corresponding protrusion 90 from the handle 20, preferably from the lower part 50 of the handle 20, therein. This may both close the dispensing holes 88, as well as providing attachment between the dispenser 16 and handle 20. The dispensing holes 88 and protrusions 90, may have a different shape or size to each other to allow for the user to identify which is for salt and which is for pepper, to accommodate the different sizes of particles, and/or to ensure that the dispenser is attached in a reliable or suitable orientation.

Additionally, said end of the container 74 may have a hole 92 for receiving the distal end of the spoon handle 62 when the spoon 14 is received inside the handle 20. Thus, the seasoning dispenser 16 may be connected via engagement with both the spoon handle 62 and the body of the device handle 20.

The lid 76 or container 74 may have notches 94, cutouts or grooves to allow purchase or grip for a user's fingers, in particular the user's fingernails. This allows for the user to conveniently remove the lid 76 from the container 74.

The egg multi-tool 10 may be used in a plurality of ways or modes.

Firstly, to open and separate a raw egg, the egg opening and separating device 12 may be used. If not yet assembled, the blade 24 may be secured to the mount 22, and the bowl 42 may be secured between the parts of the handle 20. The bowl 42 would be moved to the closed condition.

The handle 20 is held in one hand so that the bowl 42 of the separator faces upwards, and a raw egg picked up in the other hand. The raw egg is then be positioned against the cutting surface 31 of the blade 24, so that the thinner end of the egg extends through the opening of the blade 24. The egg opening and separating device 12 is positioned over a kitchen receptacle, such as a bowl.

The egg may then be pushed and/or rotated into the blade 24 to cause cutting of the shell. The different sizes of teeth provide improved cutting since the longer teeth may engage and penetrate the shell first, to provide grip on the shell, before the smaller teeth engage the shell to finish the cutting. The U-shape or C-shape also provides grip on the egg and prevents the egg from slipping as it is pushed into the blade 24. By rotating the egg, the cut can be formed all the way around the egg.

The base of the egg can then be lifted up, which leaves the top of the shell in the bowl 42 of the separator, beneath the blade 24. The yolk is deposited into the bowl 42 of the separator, and the white overflows from the bowl 42 and into the kitchen receptacle.

The yolk can then be tipped into a second kitchen receptacle, thus separating the white from the yolk. This leaves the top of the eggshell in the bowl 42 of the separator. The top of the eggshell may be encouraged to stay in place by the angle of the blade 24, for example, which may reduce the risk of the shell being decanted together with the yolk. The top of the eggshell is here a lesser part of the eggshell.

The top of the eggshell may be discarded by actuating the bowl 42, using the hole 58 of the bowl 42, to the open condition with the user's thumb of the hand which is holding the handle 20. With the bowl 42 in the open condition, the top of the eggshell may easily fall away, in particular when tipped.

The bowl 42 can be moved to the closed condition, ready for the opening and separating of a second egg.

Whilst the user may conventionally remove the thinner top end of the egg, the egg opening and separating device 12 may be used on either end of the egg.

It will be appreciated that the eggshell opener and egg separator may be used independently of each other, for example if separated or if provided on separate devices.

The eggshell opener may also be used to cut open boiled eggs. In this instance, it may be desirable for the egg to be upright, either in an egg cup or held in the hand. The user can then take the eggshell opener and position it downwards on the top of the egg so that the top of the egg extends through the opening of the blade 24. The eggshell opener can be pushed into the egg so that the teeth cut through the shell, without cutting through the white. The eggshell opener can then be pulled using the handle 20, which may remove the eggshell. Since there may be adhesion between the shell and the white, by removing the top of the shell the top portion of egg white may also shear off, exposing the yolk.

Alternatively, if the egg has been rinsed under cold water, the eggshell may be removed without the white.

This technique may be used to entirely peel an egg. For example, the eggshell opener can be used to remove the shell at the top and bottom after rinsing the egg under cold water, leaving only a central band of shell. The central band of shell can then be removed by swiping at the band with the blade 24.

If desiring to eat an egg on-the-go, the collapsible spoon 14 may first be collapsed, so that the receiver 64 of the spoon head 60 is between the first and second depressible projections 70, 72. The collapsible spoon 14 may then be inserted into the recess 18 of the handle 20 of the egg multi-tool 10, so that the distal end of the spoon handle 62 faces outwards.

The seasoning dispenser 16 can then be filled with seasoning, such as salt and/or pepper, and secured to the end of the handle 20, including being engaged with the spoon handle 62.

The egg multi-tool 10 can then be transported, together with a boiled egg.

When deciding to eat the boiled egg, the bowl 42 of the separator may be detached from the separator by disassembling the handle 20. The bowl 42 can then be positioned on a surface to be used as an egg cup, with the egg positioned in the bowl 42.

The boiled egg may be opened or topped, using the opener as described previously. The seasoning dispenser 16 may be removed from the handle 20, and salt and pepper shaken onto the egg via the dispensing holes 88 for seasoning. The user may obstruct one of the dispensing holes 88 with a finger to selectively dispense salt or pepper.

The collapsible spoon 14 can then be removed from the handle 20 of the device and assembled. To achieve this, the spoon head 60 is pushed along the spoon handle 62 so that it depresses the first depressible projection 70 and until the taper of the receiver 64 meets the flare of the handle 20. The taper and flare interengagement provides a tight fit therebetween, and the first depressible projection 70, having rebounded, abuts the receiver 64 to prevent backward movement of the spoon head 60. The collapsible spoon 14 can then be used eat the egg.

The collapsible spoon 14 can then be collapsed by pushing on the depressible projection and then moving the spoon head 60 back therealong to a position between the first and second depressible projections 70, 72. The egg multi-tool 10 can then be re-packed, and transported home.

For cleaning purposes, the blade 24 can be removed from the mount 22, the two handle 20 parts separated, and the bowl 42 detached. The collapsible spoon can also be disassembled by pushing on the second depressible projection 72 to allow the spoon head 60 to move therepast and thereby entirely separate the spoon head 60 from the spoon handle 62. The seasoning dispenser 16 can be emptied and cleaned.

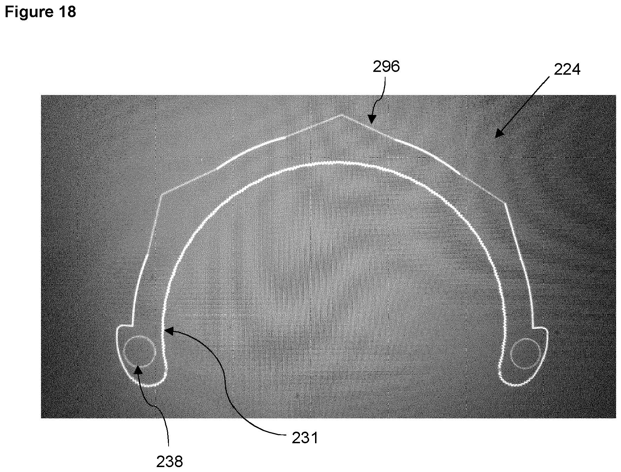

Referring to Figure 18, there is shown a third embodiment of the blade 224. The third embodiment of the blade 224 can be used with the second embodiment of the egg multi-tool 110. The third embodiment of the blade 224 is similar to the second embodiment of the blade 124, except that the third embodiment of the blade 224 has at least one pointed projection 296 rather than tabs. The or each pointed projection 296 is at an opposing side of the blade to the cutting surface 231. The or each pointed projection has flat sides. In Figure 18, there are shown three such pointed projections 296 which are spaced apart from one another. The pointed projections 296 allow for easier attachment of the blade 224 to the mount 122 and easier removal of the blade 224 from the mount 122.

As with the second embodiment, the blade 224 may additionally or alternatively include the apertures 238 or holes in each end portion of the blade 224 to allow the blade 224 to be secured to the mount 122 of the egg multi-tool 110.

It is therefore possible to provide an egg multi-tool. The egg multi-tool includes an eggshell opener or eggshell remover which has a curved blade with two ends which can engage the eggshell to provide good grip thereon. The multi-tool also includes an egg separator, which separates the yolk from white by virtue of a bowl or cup which accommodates the yolk, but which is smaller than the total liquid volume of an egg so that the white overflows. The bowl can be pivoted to release part of the shell. The multi-tool also includes a collapsible egg spoon. The spoon head can be moved down the length of the handle by virtue of a sloped depressible projection on the handle. A seasoning dispenser is also provided as part of the egg multi-tool.

The words 'comprises/comprising' and the words 'having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention as defined herein.

## Claims

1. An eggshell opener for opening an eggshell, the eggshell opener comprising:
a mount (22); and
a blade (24) for breaking the eggshell, the blade (24) being received by the mount (22) and having a curved cutting surface (31) which defines an opening (34) for receiving a liquid component of the egg and/or a part of the eggshell therethrough, the blade (24) having a curved extent which is greater than a semi-circle but is non-circular.

2. An eggshell opener as claimed in claim 1, wherein the cutting surface (31) is U-shaped, C-shaped or substantially U-shaped, or substantially C-shaped.

3. An eggshell opener as claimed in claim 1 or claim 2, wherein the blade (24) is received by the mount (22) so as to be angled inwardly.

4. An eggshell opener as claimed in claim 3, wherein the blade (24) is angled inwardly at an angle of between 40 degrees and 50 degrees relative to a normal direction of a plane defined by the opening (34).

5. An eggshell opener as claimed in any one of the preceding claims, wherein the blade (24) has teeth.

6. An eggshell opener as claimed in claim 5, wherein there are teeth of different height.

7. An eggshell opener as claimed in claim 5 or claim 6, wherein the teeth have a height of no more than 0.2 mm.

8. An eggshell opener as claimed in any one of the preceding claims, wherein blade is received by the mount in a fixed position.

9. An eggshell opener as claimed in any one of the preceding claims, wherein the eggshell opener has only one blade (24).

10. An eggshell opener as claimed in any one of the preceding claims, further comprising a handle (20) for holding the mount (22), the blade (24) being configured so that ends (32) of the cutting surface (31) face towards or substantially towards the handle (20).

11. An eggshell opener as claimed in any one of the preceding claims, wherein the blade (24) is received by the mount (22) so as to be angled towards the handle (20).

12. An egg separator for separating egg white, egg yolk, and eggshell, the egg separator comprising:
a mount (22); and
a bowl (42) received by the mount (22), the bowl (42) being dimensioned to receive an egg yolk of an egg but not the egg yolk together with the whole egg white of the egg so that when a liquid component of an egg is received therein the egg white overflows from the bowl (42);
at least part of the bowl (42) being movably securable to the mount (22) so that said at least part of the bowl (42) can move relative to the mount (22) for releasing at least part of the eggshell.

13. An egg opening and separating device (12) comprising:
a mount (22);
a blade (24) for breaking the eggshell, the blade (24) being received by the mount (22) and having a curved cutting surface (31) which defines an opening (34) for receiving a liquid component of the egg therethrough, the blade (24) having a curved extent which is greater than a semi-circle but is non-circular; and
a bowl (42) received by the mount (22) and adjacent to the blade (24), the bowl (42) being dimensioned to receive an egg yolk of an egg but not the egg yolk together with the whole egg white, at least part of the bowl (42) being movably securable to the mount (22) so that said at least part of the bowl (42) can move relative to the mount (22) for releasing at least part of the eggshell;
the device (12) being configured so that an egg may be opened by the blade (24), a top of the shell received by the bowl (42) and the egg decanted into the bowl (42) via the opening (34), and the white overflows from the bowl (42).

14. A collapsible spoon (14) comprising:
a spoon head (60) having a receiver (64); and
a spoon handle (62) which is at least in part receivable through the receiver (64), the spoon handle (62) having a depressible projection (70), at least one of the depressible projection (70) and the receiver (64) having a slope configured so that as the spoon handle (62) is inserted through the receiver (64), the depressible projection (70) and receiver (64) inter-engage along the slope and depress the projection (70) and, once the depressible projection (70) is through the receiver (64), the projection (70) is reboundable to abut the receiver (64) to prevent unintentional backward movement of the spoon handle (62).

15. An egg multi-tool (10) comprising:
the egg opening and separating device (12) of claim 13, and
the collapsible spoon (14) of claim 14 received by the egg opening and separating device (12).
